# EUROPÄISCHE PATENTSCHRIFT

(11) **EP 1 525 284 B1**
(45) Veröffentlichungstag und Bekanntmachung des Hinweises auf die Patenterteilung: **13.06.2007**
(21) Anmeldenummer: 04723912.4
(22) Anmeldetag: 27.03.2004
(51) Int. Cl.: C09J 167/04, C08K 3/00, C09J 123/08, C09J 175/04

(54) **THERMOPLASTISCHES VERSTEIFUNGSMATERIAL FÜR DIE SCHUHHERSTELLUNG UND EIN VERFAHREN FÜR SEINE HERSTELLUNG**
THERMOPLASTIC STIFFENING MATERIAL USED FOR MANUFACTURING SHOES, AND A METHOD FOR THE PRODUCTION THEREOF
MATERIAU RIGIDIFIANT S'UTILISANT DANS LA FABRICATION DE CHAUSSURES ET PROCEDE DE PRODUCTION CORRESPONDANT

(30) Priorität: 11.04.2003 DE 10316617
(43) Veröffentlichungstag der Anmeldung: 27.04.2005
(73) Patentinhaber: BK Giulini GmbH, 67065 Ludwigshafen (DE)
(72) Erfinder: WILDING, Emil, 67134 Birkenheide (DE); FATH, Markus, 67117 Limburgerhof (DE); FREY, Stefan, 67310 Hettenleidelheim (DE)
(86) Internationale Anmeldenummer: PCT/EP2004/003300
(87) Internationale Veröffentlichungsnummer: WO 2004/090061

(56) Entgegenhaltungen:
- EP-A- 0 183 912
- WO-A-94/03211
- US-A- 3 778 251
- US-A- 4 717 496

## Beschreibung

Die vorliegende Erfindung betrifft ein neuartiges thermoplastisches Versteifungsmaterial für die Herstellung von Schuhen bzw. Schuhteilen und ein umweltfreundliches Verfahren zu seiner Herstellung.

Versteifungsmaterialien für die Schuhindustrie umfassen Vorder- und Hinterkappen, aber auch Brandsohlen, Seitenverstärkungen und Schlupfriemen, Fersenfutter und Kappenkombinationen. Sie werden seit langem in modernen Schuhfertigungsprozessen eingesetzt, um dem fertigen Schuh nach Entfernung des Montageleistens bleibende Formhaltung und gute Gebrauchsstabilität, sowie die gewünschte Festigkeit bzw. Rückprallelastizität zu geben.
Die thermoplastischen Versteifungsmaterialien werden während des Verarbeitungsprozesses üblicherweise über Wärme und Druckeinwirkung (Aktivierung) mit dem Obermaterial (z. B. Leder) und ggf. dem Futtermaterial (z. B. Leder oder Textil) verklebt und der Leistenform angepasst.

In der DE 26 21 195 C sind Versteifungsmaterialien beschreiben, die in Form einer Flächenware hergestellt werden und die durch die Beschichtung eines Trägermaterials mit einem pulverförmigen schmelzbaren Kunststoffmaterial, das außerdem noch Füllstoffe enthält, hergestellt werden. Unter den schmelzbaren Kunststoffmaterialien befinden sich Polyethylen, Copolymere des Ethylens mit Vinylacetat oder Methylacrylat. Wesentliches Ziel dieser Erfindung war, die Mittel zu finden, mit deren Hilfe es gelingt, die Menge an pulverförmigem Füllstoff in der Mischung mit dem pulverförmigem schmelzbaren Kunststoffmaterial zu erhöhen und dabei eine gute Festigkeit des Materials zu erhalten. Die Lösung dieser Aufgabe bestand in der Erkenntnis, dass man die Menge des Füllstoffes bis zu 100 Vol.- % bezogen auf die Menge des schmelzbaren Kunststoffpulvers steigern kann, wenn die Korngrößenverteilung beider Komponenten vergleichbar ist. Dann umhüllt das geschmolzene Kunststoffpulver die einzelnen Füllstoffteilchen vollständig und diese Füllstoffteilchen nehmen die Eigenschaft des Kunststoffes an, d.h. sie benehmen sich wie Kunststoffe. Als Füllstoffe wurde hier Holzmehl und Kreide erwähnt.
In der Regel haben derartige thermoplastischen Flächengebilde in sich noch keine geeignete Klebereigenschaft bei Verarbeitungstemperaturen und benötigen daher an ihrer Oberfläche zusätzlich eine Heißschmelzkleberbeschichtung, um sie dauerhaft mit den Schaftkomponenten verbinden zu können.

In der EP 183 192 B2 wurde ein für die Schuhversteifungen geeignetes Material beschrieben, welches direkt verklebbar ist. Dieses Material ist gekennzeichnet durch die Verwendung von inerten Füllstoffen, die ganz oder zumindest auf ihrer Oberfläche aus Kunststoffen in Mischung mit einem schmelzbaren Bindemittel, bestehen. Das schmelzbare Bindemittel kann z. B. Polycaprolacton sein, das aufgrund seines relativ niedrigen Schmelzpunktes von ca. 60 °C besonders geeignet war.
Das Verhältnis von Bindemittel zu Füllstoff in der Mischung beträgt 70 bis 20 Gew. % Bindemittel und 30 bis 80 Gew.-% Füllstoff. Der Füllstoff hat eine Korngrößenverteilung von 50 bis 500 µm.
Wesentlich bei dieser Erfindung war die Tatsache, dass die Füllstoffe aus inerten Kunststoffen bestanden, die sich im Bindemittel im aktiviertem Zustand, d.h. im Schmelzbereich des Bindemittels nicht aufgelöst haben. Besonders geeignet war hier PVC, wobei sich die Korngrößenverteilungen auch hier miteinander kompatibel verhalten mussten, damit die Mischung aus Bindemittel und Füllstoff miteinander eine relativ gute Haftung aufwies. Als Bindemittel wurden hier weiterhin Polyurethane und modifiziertes Polyethylenvinylacetat genannt. Um eine ausreichende Stabilität bzw. Festigkeit bei der Verarbeitung zu erreichen, war in der Regel die Verwendung eines Trägermaterials notwendig. Diese Trägermaterialen bestanden aus Vliesen, textilen Materialien oder auch Release Papier. Diese Trägermaterialien werden bei der Herstellung benötigt. Bei diesen Versteifungsmaterialien werden keine zusätzlichen Schmelzkleber mehr benötigt und bei geeigneter Komponentenwahl können bis zu 80 % Füllstoffpulver auf die Gesamtbeschichtung bezogen verwendet werden. Diese Beschichtungen bzw. Versteifungsmaterialien haben auch in ausgedünnten oder geschärftem Zustand noch die gleichen Klebe- und thermoplastischen Verformungseigenschaften wie im "Vollen" Material. Die hier beschriebenen Heißschmelzkleber erweichen im Bereich zwischen 50 -80 °C und verkleben die Füllstoffpartikel durch Adhäsion auf deren Oberfläche.
Versteifungsmaterialien für die Schuhherstellung werden auch in einer großen Anzahl weiterer Patente beschrieben. Beispielhaft seien hier genannt die folgenden Schriften, jedoch ohne weitere Würdigung, weil sie den Gegenstand der vorliegenden Erfindung nicht näher berühren: WO 00/41585 A1, Anmelder Texon UK und die WO 00/53416, Anmelder Texon UK.

Eine bevorzugte Anwendungsmethode in der Schuhfertigung für solche Versteifungselemente gemäß der EP 183 192 ist das Vorheizen der Versteifungsteile verbunden mit der thermoplastischen Erweichung bzw. dem Aufschmelzen des Bindemittels (Klebers) vor dem manuellen Einlegen und Positionieren im Schuhschaft und das anschließende Heiß- und/oder Kaltverpressen zur Verformung und gleichzeitiger Verklebung. Dieses Vorheizen oder "Aktivieren" erfolgt durch Strahlungs- oder Kontaktwärme, um genügend mechanische Stabilität und kontrollierte Oberflächenklebrigkeit für die Handhabung im heißen Zustand zu bekommen, werden diese Produkte mit einem textilen Träger versehen oder mit textilen offenmaschigen Geweben, Gewirken, Vliesen o. ä. auf beiden Seiten oberflächlich abgedeckt. Durch diese Maßnahme erhält man für diese rationelle Arbeitsweise genügend hohe mechanische Stabilität bei gleichzeitig kontrolliert reduziertem Oberflächentack; der Kleber drückt sich bei der Verarbeitung unter Druck durch die textile Oberflächenabdeckung. Ein großer Nachteil liegt in den hohen Stoffkosten der Textilmaterialien und noch wesentlicher in der fehlenden Recyclingfähigkeit bedingt durch den Textilanteil.
Hier ist zu erwähnen, dass der "Abfall" beim Stanzen und Schärfen (Ausdünnen der Ränder) von Komponenten aus Plattenware bis zu 30 % des Ausgangsmaterialgewichts betragen kann.
Die sich diametral entgegenstehenden Forderungen, gute Verklebbarkeit aber tack(klebe)arme Einarbeitung von Hand in den Schuhschaft im heißen Zustand bei genügend guter Kohärenz bzw. Stabilität im Verarbeitungstemperaturbereich von 50 - 100°C, ließen sich bisher nur schwer vereinbaren und erforderten einen, wie beschrieben, mehrschichtigen Aufbau mit Textilien oder Beschichtungen, die im Zusammenspiel dann ein gebrauchstüchtiges Versteifungsmaterial ergeben. Nachteil bei dieser Art von Herstellung waren die hohen Kosten und die fehlende Recyclingmöglichkeit.

Der vorliegenden Erfindung liegt die Aufgabenstellung zu Grunde, für alle Fertigungsverfahren geeignete Heißschmelzkleber / Füllstoff Compounds zu finden, welche die oben angeführten Parameter in ihrer Gesamtheit gleichzeitig erfüllen, ohne dass ein mehrschichtiger Aufbau benötigt wird und somit auch Produktionsreste, wie Stanzgitter und Schärfabschnitte zu 100% identischem Schmelzcompound als Rohstoff wieder verwendet werden können.

Eine weitere Aufgabe dieser Erfindung ist, thermoplastische Polymere auszuwählen, die mit einem natürlich vorkommendem Füllstoff, z.B. Holz, Holzmehl, Korkprodukte, aber auch mit inerten anorganischen Füllstoffen, z.B. Kreide, Kaolin etc, die vom Verwender geforderten Werte an Festigkeit und Verklebung /Tack optimal erreichen.

Überraschenderweise wurde gefunden, dass ein thermoplastisches Versteifungsmaterial diese Aufgaben löst welches ein Heißschmelzkleber /Füllstoff Compound ist, das aus
1. einem oder mehreren Heißschmelzkleber in einer Menge von 50 bis 95 Gew.-%, deren MVR - Wert (gemessen bei 100 °C, 21,6 kg nach DIN ISO 1133) Werte von 2 bis 300, vorzugsweise 10 bis 20 cm³/10Min aufweist
   und
2. einem oder mehreren Füllstoffen in Mengen von 50 bis 5 Gew.-%, die sich im Heißschmelzkleber nicht auflösen und
der Heißschmelzkleber / Füllstoff Compound die folgenden Parameter gleichzeitig erfüllt:
1. MVR Wert zwischen 2 und 6, bevorzugt 3 bis 5 cm³/10Min
2. Oberflächenklebrigkeit (Tack) gemessen nach DIN EN14510 bei 65 °C von mindestens 10 N bis maximal 60 N, vorzugsweise 15 N, insbesondere 30 N.
3. Verklebungswert (Schälfestigkeit) gegen Obermaterial und Futter von mindestens 30 N/5 cm gemessen in Anlehnung an die DIN 53357
4. Längendehnung von maximal 25 %, vorzugsweise kleiner 20 % gemessen nach 5 Min Lagerung im Wärmeschrank bei Temperaturen von 90 °C.

Das erfindungsgemäße thermoplastische Versteifungsmaterial für die Schuhherstellung in Form eines Heißschmelzkleber / Füllstoff Compounds, ist speziell dadurch gekennzeichnet, dass die Komponente a, der Heißschmelzkleber, eine Mischung aus
**1**. einem linearem Polyester in Mengen von 75 bis 95 Gew.-% und/oder einem thermoplastischem Polyurethan in Mengen von 75 bis 95 Gew.- % und **2.** mit einem Ethylen-Vinylacetat Copolymeren in Mengen von 0 bis 25 Gew.-% mit einem Vinylacetatgehalt von 10 bis 40 %, bevorzugt 25 bis 30 % ist und der Füllstoff, ausgewählt ist aus der Gruppe der anorganischen, mineralischen Füllstoffe, der organisch-planzlichen Füllstoffe, Kunststoffe und deren Mischungen in Form von sphärischen, vielkantigen Partikeln mit einer Korngrößenverteilung zwischen 10 und 1000 µm, vorzugsweise mit 45 bis 500 µm oder in Form von Fasern mit einer Länge von 45 bis 1000 µm, vorzugsweise 45 bis 500 µm. Der Füllstoff ist bevorzugt Holzmehl mit einer Korngrößenverteilung von 45 bis 500 µm. Der Füllstoff kann aber auch Kreide, insbesondere Industriekreide sein mit eienr Korngrößenverteilung von 10 bis 45 µm oder auch ein Kunststoff z.B. Polyethylenterephtalat (PET) mit einer Korngrößenverteilung von 45 bis 500 µm sein.

Die Oberflächenklebrigkeit des Heißschmelzkleber / Füllstoff Compounds gemessen nach DIN EN14510 bei 65 °C weist einen Wert von mindestens 10 N, maximal 60 N, vorzugsweise 15 N, insbesondere 30 N. Ein höherer Wert als 60 N für den Tack setzt die Handhabbarkeit des Materials stark herab.

Die Längenausdehnung, die stellvertretend für die Stabilität des Materials im aktivierten Zustand steht, wurde in einem Wärmeschrank bei 90 °C gemessen. Die aufgehängten Probestreifen von 2 cm Breite und 10 cm Länge und 0,95 mm Dicke wurden nach 5 Minuten Wärmeinwirkung aus der Kammer genommen und die Längenänderung gemessen. Bezogen auf die ursprünglich auf die Probe aufgetragene Strecke (8cm) wurde die Änderung in % angegeben..

Heißschmelzkleber / Füllstoff Compounds, die eine Längendehnung bei Temperaturen von 90 °C von maximal 20 % aufweisen, sind optimal geeignete Materialien, sofern auch alle anderen Parameter gemäß Anspruch 1 erfüllt sind.

Ein geeignetes Verfahren zur Herstellung des thermoplastischen Versteifungsmaterials für die Schuhherstellung in Form eines Heißschmelzldeber / Füllstoff Compounds ist dadurch gekennzeichnet, dass der Heißschmelzkleber bei einer Temperatur bis maximal 220 °C aufgeschmolzen und der Füllstoff mittels einer Dosiereinrichtung in die heiße Schmelze unter Rühren oder Kneten eingetragen wird, dabei die Feuchtigkeit und austretende Gase mittels einer Entgasungseinrichtung abgesaugt werden und die so entstandene plastische Masse einer Vakuumentgasung unterworfen wird.
Die so behandelte plastische Masse kann nach allen bekannten Verfahrenstechniken der Thermoplastverarbeitung zu Schuhversteifungsteilen weiter verarbeitet werden.

In der Tabelle 1 sind für die Erfindung geeignete Mischungen von Heißschmelzkleber / Füllstoff Compounds aufgeführt. Die gemessenen Werte demonstrieren die Eignung dieser Compounds als Schuhversteifungsmaterialen.

**Tabelle 1**

| **Rezeptur** | **Verklebung Aktivierung bei 90°C+ 5" kalt gepresst gegen Mikrofaser-Kunstleder [N/5 cm]** | **Längenänderung [%] (Heißstabilität)** | **MVR bei 100 °C** / **21,6 kg /Viskosität/ [cm³/10min]** | **Tack der Rundprobe Ø2 cm [N]** | **Hauptart des Verbindungsbruchs** | **Eignung des Materials** |
|---|---|---|---|---|---|---|
| 1 | 76 | 14 | 3,6 | 39,8 | NC/CF | **Ja** |
| 2 | 65 | 25 | 6,3 | 32,2 | NC | **Ja/Nein** |
| 3 | 55 | 19 | 3,8 | 21,5 | NC | **Ja** |
| 4 | 57 | 13 | 1,8 | 10,1 | NC | **Nein** |
| 5 | 88 | 10 | 5,2 | 19,2 | NC | **ja** |
| 6 | 22 | 12 | 2,3 | < 5 | NC | **Nein** |
| 7 | 49 | ≥ 25 | 8,2 | 35,2 | NC/CF | **Nein** |
| 8 | 59 | < 25 | 2,1 | 14,8 | NC | **Ja / Nein** |
| 9 | n.n | 27 | 2,8 | 18,3 | NC | **Nein** |
| 10 | n.n (1) | n.n (1) | 16,2 | 36,4 | CF | **Nein** |
| 11 | n.n (1) | n.n (1) | 67,7 | 37,6 | CF | **Nein** |
| 12 | n.n (1) | n.g (1) | 319,6 | 31,6 | CF | **Nein** |
| 13 | 0 | n.g | n.g | 0 | - | **Nein** |
| 14 | n.g | > 5 | n.n (2) | 25 | NC | **Nein** |

Die Rezepturen 1 bis 14 enthalten folgende Bestandteile:
1. 70 Gew. % Poly(epsilon)-Caprolacton mit einem Durchschnittsmolekulargewicht von 80.000 g/mol und 30 Gew. % Holzmehl bzw. Fasern (Pinus pinea) mit einer Korngrößenverteilung von 50 - 500µm
2. 80 Gew.-% Poly(epsilon)-Caprolacton mit einem Durchschnittsmolekulargewicht von 80.000 g/mol und 20 Gew. % Holzmehl bzw. Fasern mit einer Korngrößenverteilung von 150 - 500 µm
3. 70 Gew. % Poly(epsilon)-Caprolacton mit einem Durchschnittsmolekulargewicht von 80.000 g/mol und 30 Gew. % Holzmehl bzw. Fasern mit einer Korngrößenverteilung von 150 - 500 µm
4. 60 Gew. % Poly(epsilon)-Caprolacton mit einem Durchschnittsmolekulargewicht von 80.000 g/mol und 40 Gew. % Holzmehl bzw. Fasern mit einer Korngrößenverteilung von 150 - 500 µm
5. 65 Gew. % Poly(epsilon)- Caprolacton mit einem Durchschnittsmolekulargewicht von 80.000 g/mol, 5 Gew. % EVA und 30 Gew. % Holzmehl bzw. Fasern mit einer Korngrößenverteilung von 150 - 500 µm
6. 70 Gew. % thermoplastisches Polyurethan mit einem MVR Wert von 20 bis 35 cm³/10 Min, gemessen bei 190 °C mit 10 kg Belastung und 30 Gew. % Holzmehl bzw. Fasern mit einer Korngrößenverteilung von 150 - 500 µm
7. 70 Gew. % Poly(epsilon)-Caprolacton mit einem Durchschnittsmolekulargewicht von 80.000 g/mol und 30 Gew. % einer handelsüblichen Industriekreide von der Firma Omya , einer Durchschnittskorngröße von 45 µm
8. 70 Gew. % Poly(epsilon)- Caprolacton mit einem Durchschnittsmolekulargewicht von 80.000 g/mol und 30 Gew. % gemahlener Polyethylenterephtalat (PET) als Füllstoff mit einer Korngrößenverteilung von 50 - 500 µm
9. thermoplastisches Polyurethan mit einem MVR Wert von 20 bis 35 cm³ /10 Min, gemessen bei 190 °C und 10 kg Belastung
10. Poly(epsilon)-Caprolacton mit einem Durchschnittsmolekulargewicht von 80.000 g/mol
11. Poly(epsilon)- Caprolacton mit einem Durchschnittsmolekulargewicht von 40.000 g/mol
12. Ethylen-Vinyl Acetat Copolymere mit 28 % Vinylacetatgehalt und MFI von 150 g/10 min. bei 190 °C/2,16 kg
13. Material nach DE 26 21 195 C
14. Material nach EP 183 192 C1, Beispiel 2.

Die in der Tabelle verwendeten Abkürzungen haben folgende Bedeutungen:
n. n (1) = nicht nachweisbar, da das Material zu instabil ist, es lässt sich nicht voraktiviert, d. h heiß, verarbeiten.
n. n. (2) = nicht messbar, da Gewebeanteil
n. g. = nicht gemessen
NC = Unvollständige Koaleszenz - Materialien trennen sich an der Klebefuge, also zwischen den beiden Materialien (Compound und Obermaterial)
CF = Kohäsionsbruch, bedeutet eine Trennung innerhalb des Compounds

### Zusammenfassung der Ergebnisse:

Es fallen die erfindungsgemäß geeigneten Materialien 1, 3, 5 und 8, dadurch auf, dass Sie in allen vier Kriterien die Sollwerte erfüllen, sie liegen im sog. "Produktfenster" , während die reinen Rohstoffe, die Produkte 9, 10 , 11 und 12 , sowie die Materialien 13 und 14 gemäß EP 183 192 und DE 26 21 195, in mindestens einem Kriterium abweichenden Produkte ohne Träger, nicht brauchbar sind und außerhalb dieses Produktfensters zu finden sind.
Weiterhin zeigt Tabelle 1, dass auch Kunststoffe als Füllstoffe bedingt geeignet sind, jedoch aufgrund ihrer glatten Oberflächen eine sehr geringe Kohäsion aufweisen

### Herstellungsverfahren

Der Heißschmelzkleber Poly (epsilon)- Caprolacton, mit einem Durchschnittsmolekulargewicht von 80.000 g/mol wird bei einer Temperatur von ca 180°C aufgeschmolzen. Der Füllstoff, eine Holzmehl-Fasermischung, mit einer Korngrößenverteilung von 150 - 500 µm in einer Menge von 5 - 30 % wird mittels einer Dosiereinrichtung in die heiße Schmelze unter Rühren und Kneten eingetragen und es werden die Feuchtigkeit und austretende Gase mittels einer Entgasungseinrichtung abgesaugt. Es entsteht eine plastische Masse, die weiterhin einer Vakuumentgasung unterworfen wird. Schließlich wird die so behandelte plastische Masse einem mehrstufigen Walzenkalander zugeführt, wobei die Temperatur der einzelnen Stufen des Walzenkalanders ein abnehmendes Temperaturprofil, beginnend bei 40 °C und endend unter 20 °C aufweisen. In diesem Kalander wird die plastische Masse flachgewalzt und nach Erkalten vom Kalander in Form von Flächenbahnen abgenommen. Das so erhaltene flächenförmige Material kann in der üblichen Weise durch Stanzen und Schärfen zu Versteifungsteilen (Vorderkappen / Hinterkappen) für Schuhe weiterverarbeitet werden. Die beim Stanzen und Schärfen anfallenden Abfälle werden gesammelt, und können dann nach einer Grobzerkleinerung (Häckselprozess) wieder direkt dem Herstellungsprozess zugeführt oder alternativ zu Pulver vermahlen und in Pulvertechnologien zur Herstellung von Versteifungsmaterialien als Rohstoff zum Einsatz kommen.

Das Heißschmelzkleber / Füllstoff Compound kann aber auch granuliert werden und das Granulat kann nach erneutem Aufschmelzen durch Extrusion oder kalandrienden zu einer Flachfolie weiterverarbeitet werden.
Ein weiteres geeignetes Verfahren zu Herstellung des erfindungsgemäßen Heißschmelzkleber / Füllstoff Compounds ist die Spritzgusstechnologie, mit der die Herstellung von Versteifungsteilen in Form von Spritzgußteilen gelingt.
Das erfindungsgemäße Heißschmelzkleber / Füllstoff Compound kann auch zu einem feinem Pulver von einer Korngrößenverteilung von 50 bis 1000 µm vermahlen werden und zur Herstellung von Flachfolie verwendet werden, die zur Konfektionierung von Versteifungsteilen eingesetzt wird. Weiterhin ist es möglich dieses Heißschmelzkleber / Füllstoff Compound Pulver gemäß der bekannten Pulververarbeitungstechnologien zur Herstellung von dreidimensionalen Versteilungsteilen einzusetzen.

Die mit diesen Heißschmelzkleber / Füllstoff Compounds bzw. mit den nach verschiedenen Verfahren daraus hergestellten Versteifungsmaterialien bzw. Versteifungsteilen enthaltenden Schuhe weisen besonders gute Gebrauchseigenschaften auf.

## Patentansprüche

1. Thermoplastisches Versteifungsmaterial für die Schuhherstellung in Form eines Heißschmelzkleber / Füllstoff Compounds, **dadurch gekennzeichnet, dass** es aus
a. einem oder mehreren Heißschmelzkleber (n) in einer Menge von 50 bis 95 Gew.-%, der MVR - Wert (gemessen bei 100 °C, 21,6 kg nach DIN ISO 1133) Werte von 2 bis 300, vorzugsweise 10 bis 20 cm³/10Min aufweist und aus
b. einem oder mehreren Füllstoffen in Mengen von 50 bis 5 Gew.-%, die sich im Heißschmelzkleber nicht auflösen und das Heißschmelzkleber / Füllstoff Compound die folgenden Parameter gleichzeitig erfüllt:
**1.** MVR Wert zwischen 2 und 6, bevorzugt 3 bis 5 cm³/10Min
**2.** Oberflächenklebrigkeit /Tack/ gemessen nach DIN EN 14610 bei 65 °C von mindestens 10 N bis maximal 60 N,
**3.** Verklebungswert /Schälfestigkeit/ gegen Obermaterialien und Futter von mindestens 30 N/5 cm gemessen in Anlehnung an DIN 53357
**4.** Längendehnung von maximal 25 %, gemessen nach 5 min. Lagerung im Wärmeschrank bei Temperaturen von 90 °C.

2. Thermoplastisches Versteifungsmaterial für die Schuhherstellung in Form eines Heißschmelzkleber / Füllstoff Compounds, nach Anspruch 1, **dadurch gekennzeichnet, dass** die Komponente a, der Heißschmelzkleber, eine Mischung aus 1. einem linearem Polyester in Mengen von 75 bis 95 Gew.- % und/oder einem thermoplastischem Polyurethan in Mengen von 75 bis 95 Gew.-% in Mischung mit 2. einem Ethylen-Vinylacetat Copolymeren in Mengen von 0 bis 25 Gew.-% mit einem Vinylacetatgehalt von 10 bis 40 Gew.-%, und der Füllstoff, in Mengen von 50 bis 5 Gew.-%, ausgewählt ist aus der Gruppe der anorganischen, mineralischen Füllstoffe, der organischpflanzlichen Füllstoffe, Kunststoffe und deren Mischungen, die in Form von sphärischen, vielkantigen Partikeln mit einer Korngrößenverteilung zwischen 45 und 1000 µm, sind oder in Form von Fasern mit einer Länge von 45 bis 1000 µm.

3. Versteifungsmaterial nach Anspruch 1, **dadurch gekennzeichnet, dass** der Füllstoff Holzmehl mit einer Korngrößenverteilung von 45 bis 500 µm ist.

4. Versteifungsmaterial nach Anspruch 1, **dadurch gekennzeichnet, dass** der Füllstoff Kreide mit einer Korngröße von 45 µm ist.

5. Versteifungsmaterial nach Anspruch 1, **dadurch gekennzeichnet, dass** die Oberflächenklebrigkeit /Tack/ des Heißschmelzkleber / Füllstoff Compounds einen Wert von 25 bis 45 N aufweist.

6. Versteifungsmaterial nach Anspruch 1, **dadurch gekennzeichnet, dass** die Längendehnung des Heißschmelzkleber / Füllstoff Compounds kleiner als 20 % gemessen bei Temperaturen von 90 °C beträgt.

7. Verfahren zur Herstellung des thermoplastischen Versteifungsmaterials für die Schuhherstellung in Form eines Heißschmelzkleber / Füllstoff Compounds, nach Anspruch 1, **dadurch gekennzeichnet, dass** der Heißschmelzkleber Anspruch 1, **dadurch gekennzeichnet, dass** der Heißschmelzkleber aufgeschmolzen wird und der Füllstoff mittels einer Dosiereinrichtung in die heiße Schmelze unter Rühren und Kneten eingetragen wird, dabei die Feuchtigkeit und austretende Gase mittels einer Entgasungseinrichtung abgesaugt werden und die so entstandene plastische Masse weiterhin einer Vakuumentgasung unterworfen wird und die so behandelte plastische Masse der Weiterverarbeitung zugeführt wird.

8. Verfahren zur Herstellung des thermoplastischen Versteifungsmaterials für die Schuhherstellung in Form eines Heißschmelzkleber / Füllstoff Compounds, nach Anspruch 1, **dadurch gekennzeichnet, dass** das Heißschmelzkleber / Füllstoff Compund granuliert wird, das Granulat erneut aufgeschmolzen wird und anschließend durch Extrusion oder Kalandrieren zu einer Flachfolie weiterverarbeitet wird.

9. Verfahren zur Herstellung des thermoplastischen Versteifungsmaterials für die Schuhherstellung enthaltend das Heißschmelzkleber / Füllstoff Compound nach Anspruch 1, **dadurch gekennzeichnet, dass** das Heißschmelzkleber / Füllstoff Compund als Rohstoff in Spritzgussmaschinen zu Versteifungsteilen weiterverarbeitet wird.

10. Verwendung des Heißschmelzkleber / Füllstoff Compounds nach Anspruch 1 in Form eines feinen Pulvers mit einer Korngrößenverteilung von 50 bis 1000 µm zur Herstellung von Flachfolie, die zur Konfektionierung von Versteifungsteilen eingesetzt wird.

11. Verwendung des Heißschmelzkleber / Füllstoff Compounds nach Anspruch 1 in Form eines feinen Pulvers mit einer Korngrößenverteilung von 50 bis 1000 µm zur Herstellung von dreidimensionalen Versteifungsteilen

12. Schuhe enthaltend ein Versteifungsmaterial gemäß den Ansprüchen 1 bis 11.

## Claims

1. Thermoplastic reinforcement material for shoe manufacturing in the shape of a hot-melt adhesive /filler compound, wherein it consists of
a. one or several hot-melt adhesives (n) in an amount ranging from 50 to 95 weight percentages, the MVR value (measured at 100°C, 21.6kg according to DIN ISO 1133) assuming values ranging from 2 to 300, preferentially 10 to 20cm³/10 minutes, and of
b. one or several filler substances in amounts ranging from 50 to 5 weight percentages which do not dissolve in the hot-melt adhesive and the hot-melt adhesive/filler compound simultaneously fulfills the following parameters:
1. MVR value between 2 and 6, preferentially 3 to 5cm³/10 minutes
2. Surface tack of at least 10N to 60N at maximum measured at 65°C according to DIN EN 14610
3. Adhesive resistance/peel strength/ of upper material and lining of at least 30N/5cm, measured by adopting DIN 53357 standard.
4. Maximum length extension of 25%, measured after keeping the compound for 5 minutes in a hot cabinet at a temperature of 90°

2. Thermoplastic reinforcement material for shoe manufacturing in the shape of a hot-melt adhesive /filler compound in accordance with Claim 1, wherein the Component a, the hot-melt adhesive, a mixture of 1. a linear polyester in amounts ranging from 75 to 95 weight percentages, and/or a thermoplastic urethane in amounts ranging from 75 to 95 weight percentages, in mixture with 2. an ethylene vinyl acetate copolymer in amounts ranging from 0 to 25 weight percentages including a vinyl acetate content of 10 to 40 weight percentages and the filler in amounts of 50 to 5 weight percentages is selected from the group of inorganic, mineral filling substances, organic vegetable filler substances, artificial substances, and their mixtures, which have either the shape of spherical, polygonal particles with a grain-size distribution ranging from 45 to 1,000µm or the shape of fibers with a length of 45 to 1,000µm.

3. Reinforcement material in accordance with Claim 1, wherein the filling material is wood meal with a grain-size distribution ranging from 45 to 500µm.

4. Reinforcement material in accordance with Claim 1, wherein the filling material is chalk with a grain size of 45µm.

5. Reinforcement material in accordance with Claim 1, wherein the surface tack of the hot-melt adhesive /filler compound displays a value of 25 to 45N.

6. Reinforcement material in accordance with Claim 1, wherein the elongation of the melt adhesive /filler compound is less than 20%, measured at temperatures of 90°C.

7. Method to produce the thermoplastic reinforcement material for shoe manufacturing in shape of a hot-melt adhesive / filler compound in accordance with Claim 1, wherein the hot-melt adhesive is melted and the filler is added to the hot melt with the aid of a metering unit under stirring and kneading, the moisture and liberated gases are withdrawn by a degasification device, the plastic mass thus created is subjected to further degasification under vacuum, and the plastic mass thus treated is led to further processing.

8. Method to produce the thermoplastic reinforcement material for shoe manufacturing in shape of a hot-melt adhesive / filler compound in accordance with Claim 1, wherein the hot-melt adhesive / filler compound is granulated, the granulate is remelted and then further processed to a flat film either by way of extrusion or calendering.

9. Method to produce the thermoplastic reinforcement material for shoe manufacturing containing the hot-melt adhesive / filler compound in accordance with Claim 1, wherein the hot-melt adhesive / filler compound is further processed in injection die molding machines to yield reinforcement parts.

10. Use of the hot-melt adhesive / filler compound in accordance with Claim 1 in the shape of a fine powder with a grain-size distribution ranging from 50 to 1,000µm for the production of flat films which are applied in the standardized manufacturing of the reinforcement parts.

11. Use of hot-melt adhesive / filler compound in accordance with Claim 1 in the shape of a fine powder with a grain-size distribution ranging from 50 to 1,000µm for the production of three-dimensional reinforcement parts.

12. Shoes containing a reinforcement material in accordance with the Claims 1 to 11.

## Revendications

1. Matière thermoplastique de rigidification destinée à la fabrication de chaussures se présentant sous la forme d'un compound colle thermofusible/matière de charge, **caractérisée par le fait**
a. **qu'**elle se compose d'une ou de plusieurs colle(s) thermofusible(s) dans une quantité comprise entre 50 et 95 parties-poids, que la valeur MVR (indice volumique de fluidité) (mesurée à 100° C, 21,6 kg selon DIN ISO 1133) varie de préférence entre 10 et 20 cm3/10 min et
b. d'une ou de plusieurs matière(s) de charge dans des quantités comprises entre 50 et 5 parties-poids, lesquelles ne se dissolvent pas dans la colle thermofusible et que le compound colle thermofusible/matière de charge remplit simultanément les paramètres suivants :
1. Valeur MVR comprise entre 2 et 6, de préférence 3 à 5 cm3/10 min
2. Adhérence en surface/tack mesurés selon DIN EN 14610 à 65° C d'au moins 10 N à 60 N au maximum.
3. Valeur de collage/résistance au pelage/ envers le dessus et l'intérieur d'au moins 30 N/5 cm mesurée conformément à DIN 53357.
4. Dilatation longitudinale de 25 % au maximum, mesurée après 5 m d'entreposage dans une étuve à des températures de 90° C.

2. Matière thermoplastique de rigidification destinée à la fabrication de chaussures se présentant sous la forme d'un compound colle thermofusible/matière de charge, selon la revendication 1, **caractérisée par le fait que** le composant a, la colle thermofusible, consiste en un mélange de 1. un polyester linéaire en quantités comprises entre 75 et 95 parties-poids et/ou un polyuréthane thermoplastique en quantités comprises entre 75 et 95 parties-poids mélangé à 2. un copolymère d'éthylène-vinylacétate en quantités comprises entre 0 et 25 parties-poids avec une teneur en vinylacétate de 10 à 40 parties-poids et que la matière de charge, en quantités comprises entre 50 et 5 parties-poids, est sélectionnée à partir du groupe des matières de charge minérales, inorganiques, des matières de charge organo-végétales, des matières plastiques et de leurs mélanges se présentant sous la forme de particules sphériques polyédriques avec une granulométrie comprise entre 45 et 1000 um ou sous forme de fibres d'une longueur de 45 à 1000 um.

3. Matière de rigidification selon la revendication 1, **caractérisée par le fait que** la matière de charge consiste en de la fibre de bois avec une granulométrie de 45 à 500 um.

4. Matière de rigidification selon la revendication 1, **caractérisée par le fait que** la matière de charge consiste en de la craie avec une granulométrie de 45 um.

5. Matière de rigidification selon la revendication 1, **caractérisée par le fait que** l'adhérence en surface /tack/ du compound colle thermofusible/matière de charge présente une valeur comprise entre 25 et 45 N.

6. Matière de rigidification selon la revendication 1, **caractérisée par le fait que** la dilatation en longueur du compound colle thermofusible/matière de charge est inférieure à 20 % mesurée à des températures de 90° C.

7. Procédé destiné à la fabrication de la matière de rigidification thermoplastique destinée à la fabrication de chaussures se présentant sous la forme d'un compound colle thermofusible/matière de charge selon la revendication 1, **caractérisée par le fait que** la colle thermofusible est fondue et que la matière de charge est incorporée à l'aide d'un dispositif de dosage dans la fusion chaude sous mélangeage et pétrissage et que l'humidité et les gaz formés sont aspirés par un dispositif de dégazage et que la masse plastique ainsi obtenue est encore soumise à un dégazage sous vide et que la masse plastique ainsi traitée est acheminée en vue de son prochain traitement.

8. Procédé destiné à la fabrication de la matière de rigidification thermoplastique destinée à la fabrication de chaussures se présentant sous la forme d'un compound colle thermofusible/matière de charge selon la revendication 1, **caractérisée par le fait que** le compound colle thermofusible/matière de charge est granulé, que le granulé est à nouveau fondu et qu'il est ensuite traité par extrusion ou calandrage pour obtenir une feuille plate.

9. Procédé destiné à la fabrication de la matière de rigidification thermoplastique destinée à la fabrication de chaussures comprenant un compound colle thermofusible/matière de charge selon la revendication 1, **caractérisée par le fait que** le compound colle thermofusible/matière de charge est transformé en tant que matière première dans des machines de moulage par injection pour obtenir des éléments de rigidification.

10. Utilisation du compound colle thermofusible/matière de charge selon la revendication 1 sous forme d'une fine poudre avec une granulométrie comprise entre 50 et 1000 um destinée à la fabrication d'une feuille plate utilisée pour la confection d'éléments de rigidification.

11. Utilisation du compound colle thermofusible/matière de charge selon la revendication 1 sous forme d'une fine poudre avec une granulométrie comprise entre 50 et 1000 um destinée à la fabrication d'éléments de rigidification tridimensionnels.

12. Chaussures contenant une matière de rigidification selon les revendications 1 à 11.
